Europäisches Patentamt

European Patent Office

Office européen des brevets

(19)

(11) Veröffentlichungsnummer: **0 173 282**
**A2**

(12) **EUROPÄISCHE PATENTANMELDUNG**

(21) Anmeldenummer: 85110692.2

(22) Anmeldetag: 26.08.85

(51) Int. Cl.⁴: **H04M 3/26** , H01J 3/14

(30) Priorität: 30.08.84 DE 3431948

(43) Veröffentlichungstag der Anmeldung:
05.03.86 Patentblatt 86/10

(84) Benannte Vertragsstaaten:
AT CH DE LI NL SE

(71) Anmelder: Siemens Aktiengesellschaft
Berlin und München Wittelsbacherplatz 2
D-8000 München 2(DE)

(72) Erfinder: Augustin, Helmut, Dipl.-Ing. (FH)
Leitenfeldweg 2
D-8080 Emmering(DE)
Erfinder: Schenk, Erwin, Ing. grad.
Implerstrasse 53A
D-8000 München 70(DE)

(54) Verfahren zum Übertragen von der Verkehrserfassung dienenden Auswertesignalen und Prüfsignalen in Verkehrserfasssungsanlagen.

(57) Die von Verkehrserfassungssensoren (VS1 bis VSn) bereitgestellten der Verkehrserfassung auf Fernmeldeleitungen (FML1 bis FMLn) dienenden Auswertesignale und die in den Verkehrserfassungssensoren im Zuge einer Diagnose gewonnenen Prüfsignale werden gemeinsam über eine für einen Zeitmultiplex-Betrieb ausgenutzte Übertragungsleitung (z.B. UEL1) zu einer zentralen Erfassungseinrichtung (ZER) hin in aufeinanderfolgenden Zeitmultiplex-Rahmen übertragen. Die innerhalb der Zeitmultiplex-Rahmen zusammen mit den Signalbits auftretenden Synchronisierwörter werden in aufeinanderfolgenden Zeitmultiplex-Rahmen abwechselnd in Normallage und in inverser Lage übertragen. In den Zeitmultiplex-Rahmen mit jeweils einem Synchronisierwort in Normallage werden dabei die von den Verkehrserfassungssensoren (VS1 bis VSn) bereitgestellten Auswertesignale übertragen. In entsprechender Weise treten in den Zeitmultiplex-Rahmen mit jeweils einem Synchronisierwort in der inversen Lage die in den Verkehrserfassungssensoren gewonnenen Prüfsignale auf.

Verfahren zum Übertragen von der Verkehrserfassung dienenden Auswertesignalen und Prüfsignalen in Verkehrserfassungsanlagen

Die Erfindung betrifft ein Verfahren zum Übertragen von der Verkehrserfassung auf Fernmeldeleitungen dienenden Auswertesignalen und von die Prüfung der diese Auswertesignale bereitstellenden Verkehrserfassungssensoren betreffenden Prüfsignalen in Verkehrserfassungsanlagen, in welchen die von den Verkehrserfassungssensoren her bereitgestellten Auswertesignale über eine für einen Zeitmultiplex-Betrieb ausgenutzte Übertragungsleitung zu einer zentralen Erfassungseinrichtung hin in aufeinanderfolgenden Zeitmultiplex-Rahmen übertragen werden.

Es ist bereits eine Schaltungsanordnung zum Übertragen von der Verkehrserfassung auf Fernmeldeleitungen dienenden Auswertesignalen in Verkehrserfassungsanlagen bekannt (siehe "Jahrbuch der Deutschen Bundespost", Verlag für Wissenschaft und Leben Georg Heidecker, 1982 (33.Jahrgang), Seiten 349 bis 380). Bei dieser bekannten Schaltungsanordnung sind für die Erfassung des Verkehrs auf Festverbindungen die zu überwachenden Leitungen mit Verkehrserfassungssensoren verbunden. Diese Verkehrserfassungssensoren geben jeweils durch Abgabe von Auswertesignalen Aufschluß darüber, ob auf der mit ihnen jeweils verbundenen Leitung eine Signalübertragung stattfindet oder nicht. Die Auswertesignale der einzelnen Verkehrserfassungssensoren werden dabei von einem Verkehrserfassungssensoreinsatz, an den die Verkehrserfassungssensoren angeschlossen sind, abgefragt und in einem gemeinsamen Datenstrom an einen lokalen Zwischen speicher abgegeben.

Es ist nun Aufgabe der vorliegenden Erfindung, einen Weg zu zeigen, wie bei einem Verfahren der eingangs genannten Art auf dem Übertragungsweg auftretende, die Auswertesignale beeinflussende Störungen der zentralen Erfassungseinrichtung signalisiert werden können.

Gelöst wird die vorstehend aufgezeigte Aufgabe bei einem Verfahren der eingangs genannten Art erfindungsgemäß dadurch, daß die innerhalb der Zeitmultiplex-Rahmen zusammen mit den Signalbits auftretenden Synchronisierwörter in aufeinanderfolgenden Zeitmultiplex-Rahmen abwechselnd in Normallage oder in inverser Lage übertragen werden, daß in den Zeitmultiplex-Rahmen mit jeweils einem Synchronisierwort in Normallage die von den Verkehrserfassungssensoren bereitgestellten Auswertesignale übertragen werden und daß in den Zeitmultiplex-Rahmen mit jeweils einem Synchronisierwort in der inversen Lage in den Verkehrserfassungssensoren im Zuge einer Diagnose gewonnene Prüfsignale übertragen werden.

Die Erfindung bringt den Vorteil mit sich, daß die Verkehrserfassungssensoren für eine Überprüfung ihrer fehlerfreien Funktionsweise eine Eigendiagnose durchführen und daß die dabei gewonnenen Prüfsignale über die bereits für die Übertragung von Auswertesignalen benutzte Übertragungsleitung übertragen werden können. Auf diese Weise sind zwischen den einzelnen Verkehrserfassungssensoren und der zentralen Erfassungseinrichtung keine zusätzlichen Steuerleitungen erforderlich.

Für das Erkennen von auf der Übertragungsleitung auftretenden Störungen ist es vorteilhaft, daß die von den Verkehrserfassungssensoren bereitgestellten Auswertesignale und Prüfsignale innerhalb der in Frage kommenden Zeitmultiplex- Rahmen zweimal übertragen werden, daß die innerhalb eines Zeitmultiplex-Rahmens übertragenen, dieselben Verkehrserfassungssensoren betreffenden Auswertesignale bzw. Prüfsignale in der zentralen Erfassungseinrichtung miteinander verglichen werden und daß anhand der Vergleichsergebnisse ermittelt wird, ob auf der Übertragungsleitung und/oder innerhalb eines oder mehrerer Verkehrserfassungssensoren eine Störung vorliegt. Die Anwendung dieser Verfahrensschritte bringt den Vorteil mit sich, daß Störungen auf der Übertragungsleitung ohne spezielle Prüfeinrichtungen erkannt werden können.

Vorteilhafte Ausgestaltungen der gerade genannten Verfahrensschritte ergeben sich aus den Unteransprüchen 3 bis 5.

Anhand von Zeichnungen wird die Erfindung nachstehend beispielsweise näher erläutert.

Fig. 1 zeigt in einem Blockschaltbild eine Verkehrserfassungsanlage, bei der die Erfindung angewandt ist,

Fig. 2 zeigt die innerhalb eines Zeitmultiplex-Rahmens zu der in Fig. 1 dargestellten zentralen Erfassungseinrichtung hin übertragenen Signale.

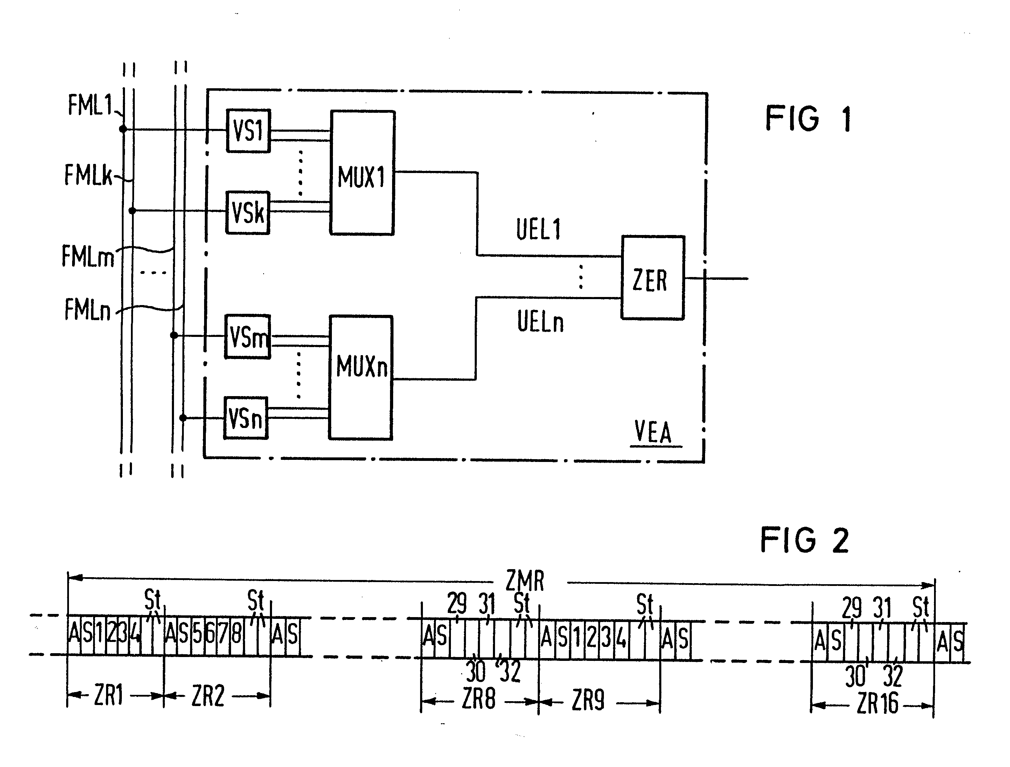

Die in Fig. 1 dargestellte Verkehrserfassungsanlage VEA weist eine Vielzahl von Verkehrserfassungssensoren VS1 bis VSn auf. Von diesen sind in Fig. 1 lediglich die Sensoren VS1, VSk, VSm und VSn dargestellt. Jeder dieser Verkehrserfassungssensoren ist zur Erfassung des Fernmeldeverkehrs mit jeweils einer Fernmeldeleitung verbunden. So ist in Fig. 1 der Verkehrserfassungssensor VS1 mit der Fernmeldeleitung FML1, der Verkehrserfassungssensor VSk mit der Fernmeldeleitung FMLk, der Verkehrserfassungssensor VSm mit der Fernmeldeleitung FMLm und der Verkehrserfassungssensor VSn mit der Fernmeldeleitung FMLn verbunden. Die Verkehrserfassungssensoren unterscheiden dabei zwischen den zwei Erfassungskriterien "Verkehr" und "kein Verkehr", d.h. sie ermitteln, ob auf den mit ihnen jeweils verbundenen Fernmeldeleitungen eine Signalübertragung erfolgt oder nicht. Die einzelnen Verkehrserfassungssensoren geben dazu jeweils an einem Ausgang den beiden Erfassungskriterien entsprechende Auswertesignale ab. Außerdem führen die Verkehrserfassungssensoren für das Erkennen einer fehlerhaften Funktionsweise eine Eigendiagnose durch und geben jeweils der Diagnose entsprechende Prüfsignale an einem gesonderten Ausgang ab.

Wie in Fig. 1 dargestellt, sind die Verkehrserfassungssensoren zu Gruppen zusammengefaßt. Eine erste Gruppe besteht aus den Verkehrserfassungssensoren VS1 bis VSk. Die Ausgänge der zu dieser Gruppe gehörenden Verkehrserfassungssensoren sind mit einem zu einer Mehrzahl von Multiplexern MUX1 bis MUXn gehörenden Multiplexer MUX1 verbunden. Eine in Fig. 1 dargestellte weitere Gruppe von Verkehrserfassungssensoren ist aus den Verkehrserfassungssensoren VSm bis VSn gebildet. Die Ausgänge der zu dieser Gruppe gehörenden Verkehrserfassungssensoren sind an den Multiplexer MUXn angeschlossen. Jeder dieser Multiplexer übernimmt die an den Ausgängen der mit ihm verbundenen Verkehrserfassungssensoren auftretenden Auswertesignale und Prüfsignale und leitet diese über eine für einen Zeitmultiplex-Betrieb ausgenutzte Übertragungsleitung (UEL1 bis UELn) an eine zentrale Erfassungseinrichtung ZER weiter. Die Übernahme der Auswertesignale und Prüfsignale in einen Multiplexer kann dabei beispielsweise durch eine zyklische Abfrage der in Frage kommenden Verkehrserfassgungssensoren erfolgen.

Im folgenden wird unter Bezugnahme auf Fig. 2 das auf den Übertragungsleitungen UEL1 bis UELn angewandte Übertragungsverfahren näher erläutert. Hierzu wird davon ausgegangen, daß an jeden der Multiplexer MUX1 bis MUXn 32 Ver kehrserfassungssensoren angeschlossen sind. Diese Verkehrserfassungssensoren werden von dem zugehörigen Multiplexer in aufeinanderfolgenden Abfragezyklen jeweils einmal abgefragt. Dabei werden in aufeinander folgen Abfragezyklen abwechselnd die an den in Frage kommenden Ausgängen der Verkehrserfassungssensoren auftretenden Auswertesignale und Prüfsignale übernommen. Die in Form von digitalen Signalen vorliegenden Auswertesignale und Prüfsignale werden dann zu einem dem bereits in der DE-PS 2951914 beschriebenen Zeitmultiplexsignal entsprechenden Zeitmultiplexsignal zusammengefaßt und zu der zentralen Erfassungseinrichtung ZER hin übertragen. Das Zeitmultiplexsignal besteht dabei aus einer Vielzahl von Zeitmultiplex-Rahmen, von denen einer in Fig. 2 mit ZMR bezeichnet ist. In aufeinanderfolgenden Zeitmultiplex-Rahmen werden, wie im folgenden noch erläutert werden wird, abwechselnd die von den Verkehrserfassungssensoren übernommenen Auswertesignale und Prüfsignale übertragen.

Jeder der Zeitmultiplex-Rahmen ist in eine Mehrzahl von Zeichenrahmen, hier 16 Zeichenrahmen ZR1 bis ZR16, gegliedert. Jeder dieser Zeichenrahmen wiederum besteht aus einem Start-Stop-Signal mit einem Anlaufschritt A, einem Synchronisierbit S, vier Datenbits und einem doppelten Stopschritt St. Als Datenbits werden dabei innerhalb eines Zeichenrahmens Auswertesignale oder Prüfsignale von vier Verkehrserfassungssensoren übertragen, beispielsweise im Zeichenrahmen ZR1 Auswertesignale bzw. Prüfsignale für die Verkehrserfassungssensoren 1 bis 4, im Zeichenrahmen ZR2 Auswertesignale bzw. Prüfsignale für die Verkehrserfassungssensoren 5 bis 8 und schließlich im Zeichenrahmen ZR8 Auswertesignale bzw. Prüfsignale für die Verkehrserfassungssensoren 29 bis 32. In den Zeichenrahmen ZR9 bis ZR16 erfolgt nochmals eine Übertragung der bereits in den Zeichenrahmen ZR1 bis ZR8 übertragenen Auswertesignale bzw. Prüfsignale, d.h. im Zeichenrahmen ZR9 werden nochmals die von den Verkehrs erfassungssensoren 1 bis 4 stammenden Auswertesignale bzw. Prüfsignale übertragen. In entsprechender Weise treten im Zeichenrahmen ZR16 nochmals die Auswertesignale bzw. Prüfsignale für die Verkehrserfassungssensoren 29 bis 32 auf.

Die Gesamtheit der innerhalb der Zeichenrahmen ZR1 bis ZR16 übertragenen Synchronisierbits ergeben ein festgelegtes Synchronisierwort. Dieses Synchronisierwort wird in aufeinanderfolgenden Zeitmultiplex-Rahmen abwechselnd in der Normallage und in der inversen Lage übertragen. In einem Zeitmultiplex-Rahmen mit einem Synchronisierwort in Normallage erfolgt beispielsweise die Übertragung der von den Verkehrserfassungssensoren bereitgestellten Auswertesignale. In entsprechender Weise werden in einem Zeitmultiplex-Rahmen mit einem Synchronisierwort in der inversen Lage die in den Verkehrserfassungssensoren im Zuge einer Eigendiagnose gewonnenen Prüfsignale übertragen. Jeweils vier aufeinanderfolgende Bits dieser Synchronisierwörter bezeichnen denjenigen Zeichenrahmen, in welchem das letzte der vier Bits übertragen wird.

Für die Bildung eines vorstehend erläuterten Zeitmultiplex-Rahmens kann in den Multiplexern MUX1 bis MUXn beispielsweise eine der in der DE-PS 2951914 beschriebenen Schaltungsanordnung entsprechende Schaltungsanordnung vorgesehen sein. Die in Fig. 3 der genannten Patentschrift mit EE bezeichnete Einphaseinrichtung ist dabei so auszubilden, daß in aufeinanderfolgenden Abfragezyklen abwechselnd Auswertesignale und Prüfsignale von den in Frage kommenden Verkehrserfassungssensoren übernommen werden und daß eine zweimalige Übertragung der übernommenen Auswertesignale bzw. Prüfsignale zu dem Speicher SP hin möglich ist. Ausserdem ist der in Fig. 3 der genannten Patentschrift mit KGEN bezeichnete,die einzelnen Synchronisierbits erzeugende Kennbitgenerator so auszubilden, daß er an seinem Ausgang die in aufeinanderfolgenden Zeitmultiplex-Rahmen zu übertragenden Synchronisierbits abwechselnd in Normallage und in inverser Lage abgibt. Hierfür kann beispielsweise in die Ausgangsleitung des Kennbitgenerators KGEN eine Exklusiv-ODER-Schaltung eingefügt werden, deren einer Eingang mit dem Ausgang f des Kennbitgenerators verbunden ist. Der andere Eingang der Exklusiv-ODER-Schaltung ist dann für die Dauer der Abgabe der zu einem Synchronisierwort gehörenden Synchronisierbits abwechselnd mit einem logischen Pegel "1" und einem logischen Pegel "0" zu beaufschlagen. Zur Steuerung kann beispielsweise eine Kippstufe verwendet werden, die als Schaltimpuls das am Ausgang des UND-Gliedes U3 auftretende Signal zugeführt erhält.

Im folgenden wird nunmehr auf den Empfangsvorgang in der zentralen Erfassungseinrichtung ZER eingegangen. Hierzu wird zunächst der Empfang der in einem Zeitmultiplex-Rahmen mit einem Synchronisierwort in Normallage übertragenen Auswertesignale erläutert. In der zentralen Erfassungseinrichtung ZER werden anhand von jeweils vier aufeinanderfolgenden Synchronisierbits die nacheinander übertragenen Zeichenrahmen ZR1 bis ZR16 eines Zeitmultiplex-Rahmens und innerhalb der Zeichenrahmen die den übertragenen Auswertesignalen zugehörigen Verkehrserfassungssensoren identifiziert. Jedem dieser Verkehrserfassungssensoren ist nun in der zentralen Erfassungseinrichtung innerhalb einer Speicheranordnung eine Speicherzelle zugeordnet. In diese Speicherzellen werden die in den Zeichenrahmen ZR1 bis ZR8 übertragenen Auswertesignale übernommen. Jedes dieser gespeicherten Auswertesignale wird anschließend mit dem in den Zeichenrahmen ZR9 bis ZR16 übertragenen, denselben Verkehrserfassungssensor betreffenden Auswertesignal verglichen. Eine Nichtübereinstimmung der miteinander verglichenen Auswertesignale wird als Störung auf der Übertragungsleitung gewertet. Bei einer wiederholten Feststellung einer solchen Nichtübereinstimmung der miteinander verglichenen, ein und denselben Verkehrserfassungssensor und damit ein und dieselbe Fernmeldeleitung betreffenden Auswertesignale wird eine Störung signalisiert. Dies kann bewirken, daß beispielsweise eine Verkehrserfassung zum Zwecke der Tarifierung für die von der Störung betroffene Fernmeldeleitung unterbleibt.

Bei einer Übereinstimmung der miteinander verglichenen Auswertesignale gibt der momentane logische Pegel dieser Auswertesignale Aufschluß darüber, ob auf der zugehörigen Fernmeldeleitung eine Signalübertragung stattfindet oder nicht, d.h. ob das Erfassungskriterium "Verkehr" oder "kein Verkehr" vorliegt. Beispielsweise kann ein logischer Pegel "1" anzeigen, daß eine Signalübertragung stattfindet. In entsprechender Weise findet bei Auftreten eines logischen Pegels "0" keine Signalübertragung statt. In der zentralen Erfassungseinrichtung ZER kann dabei für eine nutzungszeitabhängige Tarifierung die Anzahl der logischen Pegel "1" erfaßt werden, welche für die einzelnen Verkehrserfassungssensoren als Kennzeichen einer Signalübertragung in aufeinanderfolgenden Zeitmultiplex-Rahmen übertragen werden. Die jeweils ermittelte Anzahl der logischen Pegel "1" gibt dann Aufschluß über die für eine Signalübertragung auf der jeweiligen Fernmeldeleitung benötigte Zeit und damit über die zu entrichtende nutzungszeitabhängige Gebühr.

Für den Empfang von in einem Zeitmultiplex-Rahmen mit einem Synchronisierwort in der inversen Lage übertragenen Prüfsignalen laufen den gerade erläuterten Empfangsvorgängen entsprechende Empfangsvorgänge ab. So werden auch hier anhand von jeweils vier aufeinanderfolgenden Synchronisierbits die innerhalb eines Zeitmultiplex-Rahmens nacheinander übertragenen Zeichenrahmen ZR1 bis ZR16 und innerhalb der Zeichenrahmen die den übertragenen Prüfsignalen zugehörigen Verkehrserfassungssensoren identifiziert. Die in den Zeichenrahmen ZR1 bis ZR8 übertragenen Prüfsignale werden ebenfalls in die den einzelnen Verkehrserfassungssensoren zuge ordneten Speicherzellen der bereits genannen Speicheranordnung übernommen. In diese Speicherzellen können sowohl Auswertesignale als auch Prüfsignale zwischengespeichert werden, da eine Zwischenspeicherung dieser Signale lediglich für eine einem Zeitmultiplex-Rahmen entsprechende Zeitdauer erforderlich ist.

Jedes der in der Speicheranordnung gespeicherten Prüfsignale wird anschließend mit dem in den Zeichenrahmen ZR9 bis ZR16 übertragenen, denselben Verkehrserfassungssensor betreffenden Prüfsignal verglichen. Auch hierbei wird eine Nichtübereinstimmung der miteinander verglichenen Prüfsignale als Störung auf der Übertragungsleitung gewertet. Eine wiederholte Feststellung einer solchen Nichtübereinstimmung führt wiederum zur Signalisierung einer Störung.

Bei einer Übereinstimmung der miteinander verglichenen Prüfsignale gibt der momentane logische Pegel dieser Prüfsignale an, ob der zugehörige Verkehrserfassungssensor fehlerfrei arbeitet oder nicht. So kann beispielsweise ein logischer Pegel "1" ein positives Diagnoseergebnis, d.h. eine fehlerfreie Funktionsweise, anzeigen. In entsprechender Weise liegt bei Auftreten eines logischen Pegels "0" ein negatives Diagnoseergebnis vor, d.h. der zugehörige Verkehrserfassungssensor arbeitet nicht fehlerfrei. Die Diagnoseergebnisse der einzelnen Verkehrserfassungssensoren werden für eine Bewertung der im nachfolgenden Zeitmultiplex-Rahmen übertragenen Auswertesinale herangezogen.

Für die vorstehend erläuterte Zwischenspeicherung der in den Zeichenrahmen ZR1 bis ZR8 übertragenen Auswertesignale bzw. Prüfsignale kann beispielsweise so vorgegangen sein, daß die zentrale Erfassungseinrichtung ZER eingangsseitig einen sogenannen universellen Asynchron-Sender/Empfänger-Baustein aufweist, der ihm als Start-Stop-Zeichen in serieller Form angebotene Signale zeichengerecht in eine par allele Form umsetzt. Jeweils bei Vorliegen eines umgesetzten Zeichens wird dann das innerhalb eines Zeichens zusammen mit den Auswertesignalen übertragene Synchronisierbit in ein vier Bit aufnehmendes und vier parallele Ausgänge aufweisendes Schieberegister übernommen. Mit diesem Schieberegister ist ausgangsseitig eine Decodiereinrichtung verbunden, die die an den Ausgängen des Schieberegisters auftretenden Signale unverändert weiterleitet, wenn die empfangenen Synchronisierbits zu einem Zeitmultiplex-Rahmen mit einem Synchronisierwort in der Normallage gehören. Gehören dagegen die empfangenen Synchronisierbits zu einem Zeitmultiplex-Rahmen mit einem Synchronisierwort in der inversen Lage, so werden die an den Ausgängen des Schieberegisters auftretenden Synchronisierbits invertiert weitergeleitet. Für die Umsteuerung erhält die Decodiereinrichtung ein entsprechendes Steuersignal zugeführt. Dieses Steuersignal kann aus Bitkombinationen abgeleitet werden, die am Anfang und am Ende eines jeden Zeitmultiplex-Rahmens auftreten. Die gerade erwähnte Decodiereinrichtung kann beispielsweise entsprechend der vier Ausgänge des Schieberegisters aus vier separaten Exklusiv-ODER-Schaltungen aufgebaut sein. Auf die Ansteuerung einer solchen Exklusiv-ODER-Schaltung für die Übertragung von Signalen in der Normallage oder in der inversen Lage ist bereits oben eingegangen worden.

Bei Auftreten einer Bitkombination am Ausgang des Schieberegisters, die einen der Zeichenrahmen ZR1 bis ZR8 identifiziert, wird ein der Bitkombination entsprechender Speicherbereich der obengenannten Speicheranordnung für das Einschreiben von Auswertesignalen bzw. Prüfsignalen adressiert. In diesen Speicherbereich werden dann die innerhalb des betreffenden Zeichenrahmens übertragenen Auswertesignale bzw. Prüfsignale übernommen. Tritt an den Ausgängen des genannten Schieberegisters dagegen eine einen der Zeichenrahmen ZR9 bis ZR16 identifizierende Bitkombination auf, so wird für einen Auslesevorgang ein dieser Bitkombination entsprechender Speicherbereich angesteuert, in dem zuvor dieselben Verkehrserfassungssensoren betreffende Auswertesignale bzw. Prüfsignale eingetragen worden sind. Dies ist beispielsweise bei einer den Zeichenrahmen ZR9 identifizierenden Bitkombination der Speicherbereich, in dem Auswertesignale bzw. Prüfsignale für die Verkehrserfassungssensoren 1 bis 4 gespeichert sind.

Nach dem Auslesen der in einen Speicherbereich gespeicherten Auswertesignale bzw. Prüfsignale erfolgt dann mit Hilfe eines entsprechenden Vergleichers ein Vergleich dieser Auswertesignale bzw. Prüfsignale mit den an den Ausgängen des universellen Asynchron-Sender/Empfänger-Bausteines gerade auftretenden Auswertesignalen bzw. Prüfsignalen. Dieser Vergleich kann je nach der Ausgestaltung des Vergleichers für die in Frage kommenden Verkehrserfassungssensoren getrennt oder für sämtliche Verkehrserfassungssensoren parallel durchgeführt werden. Die aus einem solchen Vergleich resultierenden oben angegebenen Vergleichsergebnisse werden dann in der zentralen Erfassungseinrichtung ZER gesondert für die einzelnen Verkehrserfassungssensoren weiter behandelt.

**Ansprüche**

1. Verfahren zum Übertragen von der Verkehrserfassung auf Fernmeldeleitungen (FML1 bis FMLn) dienenden Auswertesignalen und von die Prüfung der diese Auswertesignale bereitstellenden Verkehrserfassungssensoren (VS1 bis VSn) betreffenden Prüfsignalen in Verkehrserfassungsanlagen (VEA), in welchen die von den Verkehrserfassungssensoren her bereitgestellten Auswertesignale über eine für einen Zeitmultiplex-Betrieb ausgenutzte Übertragungsleitung (z.B. UEL1) zu einer zentralen Erfassungseinrichtung (ZER) hin in aufeinanderfolgenden Zeitmultiplex-Rahmen übertragen werden, **dadurch gekennzeichnet,** daß die innerhalb der Zeitmultiplex-Rahmen zusammen mit den Signalbits auftretenden Synchronisierwörter in aufeinanderfolgenden Zeitmultiplex-Rahmen abwechselnd in Normallage und in inverser Lage übertragen werden, daß in den Zeitmultiplex-Rahmen mit jeweils einem Synchronisierwort in Normallage die von den Verkehrserfassungssensoren (VS1 bis VSn) bereitgestellten Auswertesignale übertragen werden und daß in den Zeitmultiplex-Rahmen mit jeweils einem Synchronisierwort in der inversen Lage in den Verkehrserfassungssensoren (VS1 bis VSn) im Zuge einer Diagnose gewonnene Prüfsignale übertragen werden.

2. Verfahren nach Anspruch 1, **dadurch gekennzeichnet,** daß die von den Verkehrserfassungssensoren (VS1 bis VSn) bereitgestellten Auswertesignale und Prüfsignale innerhalb der in Frage kommenden Zeitmultiplex-Rahmen zweimal übertragen werden, daß die innerhalb eines Zeitmultiplex-Rahmens übertragenen, dieselben Verkehrserfassungssensoren betreffenden Auswertesignale bzw. Prüfsignale in der zentralen Erfassungsein richtung (ZER) miteinander verglichen werden und daß anhand der Vergleichsergebnisse ermittelt wird, ob auf der Übertragungsleitung (z.B. UEL1) und/oder innerhalb eines oder mehrerer Verkehrserfassungssensoren eine Störung vorliegt.

3. Verfahren nach Anspruch 2, **dadurch gekennzeichnet**, daß eine Nichtübereinstimmung der miteinander verglichenen Auswertesignale als Störung auf der Übertragungsleitung (UEL1) erkannt wird und daß bei einer Übereinstimmung der miteinander verglichenen Auswertesignale abhängig vom Momentanwert dieser Auswertesignale ermittelt wird, ob auf der diese Auswertesignale betreffenden Fernmeldeleitung eine Signalübertragung erfolgt oder nicht.

4. Verfahren nach Anspruch 3, **dadurch gekennzeichnet**, daß bei einer wiederholten Feststellung einer Nichtübereinstimmung der miteinander verglichenen, ein und dieselbe Fernmeldeleitung betreffenden Auswertesignale eine Störung signalisiert wird.

5. Verfahren nach einem der Ansprüche 2 bis 4, **dadurch gekennzeichnet**, daß die Nichtübereinstimmung der miteinander verglichenen Prüfsignale als Störung auf der Übertragungsleitung (UEL1) gewertet wird und daß bei einer Übereinstimmung der miteinander verglichenen Prüfsignale in Abhängigkeit vom Momentanwert dieser Prüfsignale ermittelt wird, ob der in Frage kommende Verkehrserfassungssensor fehlerfrei arbeitet oder nicht.

FIG 1

FIG 2